# EUROPEAN PATENT APPLICATION

(11) **EP 1 586 595 A1**
(43) Date of publication of application: **19.10.2005**
(21) Application number: 05075762.4
(22) Date of filing: 01.04.2005
(51) Int. Cl.: C08G 18/80

(54) **Activatable material and method of forming and using same**

(30) Priority: 25.03.2005 US 89712; 27.10.2004 US 622442 P; 15.04.2004 US 562663 P
(71) Applicant: L & L Products, Inc., Romeo, MI 48065 (US)
(72) Inventor: Kassa, Abraham, Shelby Township, Michigan 48316 (US); Harthcock, Matthew, Oakland Township, Michigan 48306 (US); Sendijarevic, Aisa, Troy, Michigan 48085 (US); Sendijarevic, Vahid, Troy, Michigan 48085 (US)
(74) Representative: Bawden, Peter Charles

(57) **Abstract**

An activatable material and articles incorporating the same is disclosed. The activatable material includes an isocyanate and an isocyanate reactive compound. The isocyanate is typically blocked such that the activatable material is non-reactive at temperatures below about 100 °C. The activatable material is preferably used for sealing, baffling, reinforcing, adhering, sound attenuation, sound damping or the like of an article of manufacture such as an automotive vehicle.

## Description

### CLAIM OF PRIORITY

To the extent applicable, the present invention claims the benefit of the priority of U.S. Provisional Application Serial Number 60/562,663, filed April 15, 2004, the contents of which are incorporated by reference herein.

### FIELD OF THE INVENTION

The present invention relates generally to an activatable material, a method of forming the activatable material and a method of using the activatable material for providing sealing, baffling, reinforcement, sound dampening, sound attenuation, combinations thereof or the like to components of articles of manufacture such as automotive vehicles.

### BACKGROUND OF THE INVENTION

For many years industry, and particularly the transportation industry has been concerned with providing functional attributes sealing, baffling, acoustic attenuation, sound dampening and reinforcement to articles of manufacture such as automotive vehicles. In turn, industry has developed a wide variety of materials for providing such functional attributes. In the interest on continuing such innovation, the present invention seeks to provide an improved material for providing sealing, baffling, acoustic attenuation, sound dampening, reinforcement, combinations thereof or the like to articles of manufacture or parts thereof. The present invention also provides a method of forming the improved material and a method for use of the improved material.

### SUMMARY OF THE INVENTION

Accordingly, the present invention provides an activatable material and a method of providing sealing, baffling, acoustic attenuation, sound dampening, reinforcement, combinations thereof or the like to a portion of an article of manufacture such as an automotive vehicle with the activatable material. The activatable material typically includes one or more isocyanates and one or more isocyanate reactive compounds such as polyols. In one embodiment, the one or more isocyanates are blocked such that the activatable material is substantially stable (i.e., non-reactive) at relatively lower temperatures (e.g. temperatures below about 100 °C or higher, below about 80 °C, below about 60 °C or even below about 40 °C). In the embodiment, the isocyanates typically become unblocked (e.g., unstable or reactive) at relatively higher temperatures (e.g. temperatures above about 100 °C or lower, above about 120 °C (e.g. around 127 °C), above about 140 °C or even above about 160 °C (e.g., around 177°C or 200°C)) such that the isocyanates react with the isocyanate reactive compounds to activate the activatable material such that it expands (e.g., foams), cures, flows or a combination thereof.

The activatable material may be applied to a surface of a carrier member, a surface of a component of the article of manufacture or any other substrate. According to one preferred embodiment the activatable material is inserted into a cavity of an automotive vehicle, although it is contemplated that the activatable material may be applied to any location of the vehicle. In such an embodiment, the activatable material may be applied to the carrier member prior to insertion into the cavity, although certainly not required. After application, the activatable material is preferably activated to bond the activatable material to surfaces of any substrate to which it has been applied.

According to one highly preferred embodiment, the activatable material is formed into a powder and applied to an adhesive material to form a synthetic material with a tacky surface and a non-tacky surface. Thereafter, the non-tacky surface may be contacted so as to bring the tacky surface into contact with a component of an article of manufacture.

### BRIEF DESCRIPTION OF THE DRAWINGS

Fig. 1 is a perspective view of a reinforcement member formed in accordance with an aspect of the present invention.
Fig. 2 is a perspective view of an automotive vehicle according to an aspect of the present invention.
Fig. 3 is a perspective view of a panel being reinforced in accordance with an aspect of the present invention.
Fig. 4 is a perspective view of a reinforced panel formed in accordance with an aspect of the present invention.
Figs. 5-7 illustrate members being adhered together according to an aspect of the present invention.
Fig. 8 is a sectional view of a synthetic material formed in accordance with an aspect of the present invention.
Fig. 9 is a schematic view of a synthetic material being formed in accordance with an aspect of the present invention.

### DETAILED DESCRIPTION

The present invention is predicated upon the provision of an activatable material, and articles incorporating the same wherein the activatable material can typically be activated to form a polyurethane material such as a polyurethane adhesive, polyurethane foam, a combination thereof or the like. The activatable material preferably assists in providing structural reinforcement, adhesion, baffling, sealing, acoustical damping/attenuation properties, combinations thereof or the like within a cavity of or upon a surface of a structure, or to one or more structural members (e.g., a body panel or structural member) of an article of manufacture (e.g., an automotive vehicle). As used herein, the phrase activatable material includes any material that may be activated to change states by an ambient condition or another condition. For example, the material may expand, flow, melt, cure, a combination thereof or the like upon exposure to a condition such a heat, pressure, chemical exposure, combinations thereof or the like. In one preferred embodiment, the activatable material is relatively stable at lower temperatures and becomes activated at higher temperatures as further described herein.

The activatable material may be used for a variety of articles of manufacture including, without limitation, buildings, furniture, household appliances, combinations thereof or the like. It has been found that the activatable material of the present invention is particularly useful when used for transportation vehicles such as automotive vehicle, boats, airplanes, trains or the like.

The activatable material typically includes a polyol or other resin or compound and an isocyanate, and optionally, a filler. As used herein, the term "isocyanate" is meant to refer to any chemical compound or molecule that includes one or more isocyanate (NCO) groups, whether blocked or unblocked. The activatable material preferably includes at least three of the following:
(a) up to about 70 parts by weight one or more isocyanates, which is typically blocked, although not required;
(b) up to about 80 parts by weight one or more isocyanate reactive compounds such as polyol resins; and
(c) optionally, one or more additives such as chain extenders, cross-linking agents, catalysts, foaming agents, processing aids, fillers, combinations thereof or the like.

The concentration may be higher or lower depending upon the intended application of the activatable material. In a preferred aspect of the invention, the amount by weight polyurethane resin to isocyanate is from about 1:10 to about 10:1, more preferably about 1:5 to about 5:1 and still more preferably about 1:3 to about 3:1. In addition to the above ingredients, it is contemplated that the activatable material may also include additional ingredients such as blowing agents, blowing agent accelerators, curing agents, curing agent accelerators, reactive and unreactive additives, rheology modifiers, other polymers, catalysts, surfactants, oxidative stabilizers, nucleating agents, fillers, combinations thereof or the like.

The activatable material of the present invention may be applied to various articles of manufacture for adding structural integrity to portions or members of articles, for providing acoustical damping to the articles or for sealing the articles. Examples of such articles of manufacture include, without limitation, household or industrial appliances, furniture, storage containers, buildings, structures or the like. In preferred embodiments, the activatable material is applied to portions of an automotive vehicle such as body or frame members (e.g., a vehicle frame rail) of the automotive vehicle. One method of the present invention contemplates applying the activatable material to a surface of one of the above structures in an unexpanded or partially expanded state and activating the material for expanding it to a volume greater than its volume in the unexpanded state (e.g., at least 50% greater, at least 100% greater, at least 500% greater, at least 1000% greater, at least 2000% greater, at least 5000% greater or higher). It is also contemplated, however, that the activatable material may be applied to such a surface and cured without expansion thereof.

Percentages herein refer to weight percent, unless otherwise indicated.

### Isocyanate Reactive Component

Various isocyanate reactive compounds can be used to form an isocyanate reactive component, which, in turn, can be used to form the activatable material. Isocyanate-reactive compounds suitable for the activatable material generally include from about 1 to about 8 or more isocyanate-reactive groups and preferably from about 2 to about 6 isocyanate-reactive groups. Suitable compounds include polyacetals, polycarbonates, polyesterethers, polyester carbonates, hydrocarbons polythioethers, polyamides, polyols (e.g., di- or polyhydric alcohols) such as polyethers, glycols, polyesters and castor oil, polyesteramides, polysiloxanes, polybutadienes, and polyacetones. The isocyanate-reactive compounds typically contain from about 2 or fewer to about 4 or greater reactive amino or hydroxyl groups. Isocyanate-reactive compounds can be included in the isocyanate-reactive component in an amount of from about 5 to about 100% by weight (based on total weight of isocyanate-reactive component), more typically from about 10 to about 90% by weight and even more typically from about 40 to about 80% by weight. Preferably, although not required, the above isocyanate-reactive compounds can create a blowing effect by liberating a gas (e.g., CO₂) upon reaction with the isocyanate.

Suitable hydroxyl-containing polyethers are known and commercially available. Such polyether polyols can be prepared, for example, by the polymerization of epoxides such as ethylene oxide, propylene oxide, butylene oxide, tetrahydrofuran, styrene oxide, or epichlorohydrin, optionally in the presence of BF₃, or by chemical addition of such epoxides, optionally as mixtures or successively, to starting components containing reactive hydrogen atoms, such as water, alcohols, or amines. Examples of such starting components include ethylene glycol, 1,2- or 1,3-propanediol, 1,2-, 1,3-, or 1,4-butanediol, glycerin, trimethylolpropane, pentaerythritol, 4,4'-dihydroxydiphenylpropane, aniline, 2,4- or 2,6-diaminotoluene, ammonia, ethanolamine, triethanolamine, or ethylene diamine. Sucrose polyethers may also be used. Polyethers that contain predominantly primary hydroxyl groups (up to about 90% by weight, based on all of the hydroxyl groups in the polyether) are preferred in certain instances. Polyethers modified by vinyl polymers of the kind obtained, for example, by the polymerization of styrene and acrylonitrile in the presence of polyethers are also suitable, as are polybutadienes containing hydroxyl groups. Particularly preferred polyethers include polyoxyalkylene polyether polyols, such as polyoxyethylene diol, polyoxypropylene diol, polyoxybutylene diol, and polytetramethylene diol.

Hydroxyl-containing polyesters are also suitable for use in the isocyanate-reactive component. Suitable hydroxyl-containing polyesters include reaction products of polyhydric alcohols (preferably diols), optionally with the addition of trihydric alcohols, and polybasic (preferably dibasic) carboxylic acids. Instead of free polycarboxylic acids, the corresponding polycarboxylic acid anhydrides or corresponding polycarboxylic acid esters of lower alcohols or mixtures thereof may be used for preparing the polyesters. The polycarboxylic acids may be aliphatic, cycloaliphatic, aromatic, or heterocyclic and may be substituted, e.g., by halogen atoms, and/or unsaturated. Suitable polycarboxylic acids include succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, glutaric acid anhydride, maleic acid, maleic acid anhydride, fumaric acid, dimeric and trimeric fatty acids, dimethyl terephthalic, and terephthalic acid bis-glycol esters. Suitable polyhydric alcohols include ethylene glycol, 1,2- and 1,3-propanediol, 1,4- and 2,3-butanediol, 1,6-hexanediol, 1,8-octanediol, neopentyl glycol, 1,3- and 1,4-bis(hydroxy-methyl)cyclohexane, 2-methyl-1,3-propanediol, glycerol, trimethylolpropane, 1,2,6-hexanetriol, 1,2,4-butanetriol, trimethylolethane, pentaerythritol, quinnitol, mannitol, sorbitol, methyl glycoside, diethylene glycol, triethylene glycol, tetraethylene glycol, polyethylene glycols, dipropylene glycol, polypropylene glycols, dibutylene glycol, and poly-butylene glycols. The polyesters may also contain a proportion of carboxyl end groups. Polyesters of lactones, such as .epsilon.-caprolactone, or of hydroxycarboxylic acids, such as .omega.-hydroxycaproic acid, may also be used. Hydrolytically stable polyesters are preferably used in order to obtain the greatest benefit relative to the hydrolytic stability of the final product. Preferred polyesters include polyesters obtained from adipic acid or isophthalic acid and straight chained or branched diols, as well as lactone polyesters, preferably those based on caprolactone and diols.

Suitable polyacetals include, without limitation, compounds obtained from the condensation of glycols, such as diethylene glycol, triethylene glycol, 4,4'-dihydroxydiphenylmethane, and hexanediol, with formaldehyde or by the polymerization of cyclic acetals, such as trioxane.

Suitable polycarbonates include, without limitation, those prepared by the reaction of diols, such as 1,3-propanediol, 1,4-butanediol, 1,6-hexanediol, diethylene glycol, triethylene glycol, tetraethylene glycol, or thiodiglycol, with phosgene or diaryl carbonates such as diphenyl carbonate.

Suitable polyester carbonates include, without limitation, those prepared by the reaction of polyester diols, with or without other diols such as 1,3-propanediol, 1,4-butanediol, 1,6-hexanediol, diethylene glycol, triethylene glycol, tetraethylene glycol, or thiodiglycol, with phosgene, cyclic carbonates, or diaryl carbonates such as diphenyl carbonate. Suitable polyester carbonates more generally include compounds such as those disclosed in U.S. Pat. No. 4,430,484.

Suitable polythioethers include, without limitation, the condensation products obtained by the reaction of thiodiglycol, either alone or with other glycols, formaldehyde, or amino alcohols. The products obtained are polythio-mixed ethers, polythioether esters, or polythioether ester amides, depending on the components used.

Suitable polyester amides and polyamides include, for example and without limitation, the predominantly linear condensates prepared from polybasic saturated and unsaturated carboxylic acids or the anhydrides thereof and polyvalent saturated or unsaturated amino alcohols, diamines, polyamines, and mixtures thereof.

Other suitable hydroxyl-containing compounds include, without limitation, polyhydroxyl compounds already containing urethane or urea groups. Products of addition of alkylene oxides to phenol-formaldehyde resins or to ureaformaldehyde resins are also suitable.

Polyhydroxyl compounds in which polyadducts or polycondensates or polymers are present in a finely dispersed or dissolved form may also be used according to the invention. Polyhydroxyl compounds of this type may be obtained, for example, by carrying out polyaddition reactions (e.g., reactions between polyisocyanates and amino functional compounds) or polycondensation reactions (e.g., between formaldehyde and phenols or amines) in situ in the above-mentioned hydroxyl-containing compounds. Suitable compounds may also be obtained according to U.S. Pat. Nos. 3,869,413 or 2,550,860 by mixing a previously prepared aqueous polymer dispersion with a polyhydroxyl compound and then removing water from the mixture.

Polyhydroxyl compounds modified with vinyl polymers, such as those obtained, for example, by the polymerization of styrene and acrylonitrile in the presence of polycarbonate polyols (U.S. Pat. No. 3,637,909) can also be suitable for the invention.

General discussions of representative hydroxyl-containing compounds that may be used according to the present invention can be found, for example, in Polyurethanes, Chemistry and Technology by Saunders and Frisch, Interscience Publishers, New York, London, Volume I, 1962, pages 32-42 and pages 44-54, and Volume II, 1964, pages 5-6 and 198-199, and in Kunststoff-Handbuch, Volume VII, Vieweg-Hochtlen, Carl-Hanser-Verlag, Munich, 1966, on pages 45 to 71.

Suitable isocyanate-reactive compounds containing amino groups include the so-called amine-terminated polyethers containing primary or secondary (preferably primary) aromatically or aliphatically (preferably aliphatically) bound amino groups. Compounds containing amino end groups can also be attached to the polyether chain through urethane or ester groups. These amine-terminated polyethers can be prepared by any of several methods known in the art. For example, amine-terminated polyethers can be prepared from polyhydroxyl polyethers (e.g., polypropylene glycol ethers) by a reaction with ammonia in the presence of Raney nickel and hydrogen. Polyoxyalkylene polyamines can be prepared by a reaction of the corresponding polyol with ammonia and hydrogen in the presence of a nickel, copper, chromium catalyst. Polyethers containing amino end groups may be prepared by hydrogenation of cyanoethylated polyoxypropylene ethers.

Relatively high molecular weight polyhydroxy-polyethers suitable for the present invention may be converted into the corresponding anthranilic acid esters by reaction with isatoic acid anhydride. Relatively high molecular weight compounds containing amino end groups may also be obtained by reacting isocyanate prepolymers based on polyhydroxyl polyethers with hydroxyl-containing enamines, aldimines, or ketimines and hydrolyzing the reaction product.

Aminopolyethers obtained by the hydrolysis of compounds containing isocyanate end groups are also preferred amine-terminated polyethers. Preferred amine-terminated polyethers are prepared by hydrolyzing an isocyanate compound having an isocyanate group content of from 0.5 to 40% by weight. The most preferred polyethers are prepared by first reacting a polyether containing two to four hydroxyl groups with an excess of an aromatic polyisocyanate to form an isocyanate terminated prepolymer and then converting the isocyanate groups to amino groups by hydrolysis.

Amine-terminated polyethers useful in the present invention are in many cases mixtures with other isocyanate-reactive compounds having the appropriate molecular weight. These mixtures generally should contain (on a statistical average) two to four isocyanate reactive amino end groups.

Examples of particularly preferred isocyanate reactive compounds (e.g., polyols, chain exenders, cross-linkers and other reactants) include, without limitation the following: a polycaprolactone diol sold under the tradename TONE POLYOL 0240, which is commercially available from Union Carbide Corporation, P.O. Box 4393, Houston, Texas 77210 or Dow Chemical, Midland, Michigan; a 1 poly(oxypropylene)glycol sold under the tradename JEFFOL PPG-2000, which is commercially available from Huntsman-Polyurethanes, 286 Mantua Grove Road, West Deptford, NJ 08066; a castor based modifier polyol-triol sold under the tradename CASPOL® 1962, which is commercially available from CasChem, Inc, 40 Avenue A, Bayonne, New Jersey 07002; an ortophtalate-diethylene glycol polyester polyol sold under the tradename STEPANPOL PS-2002, which is commercially available from Stepan, 22 W. Frontage Road, Northfield, Illinois 60093; a castor based modifier polyol-functionality = 4 sold under the tradename CASPOL® 5004, which is commercially available from CasChem, Inc, 40 Avenue A, Bayonne, New Jersey 07002; a N,N,N'N'-tetrakis (2-hydroxylproply) ethylene diamine sold under the tradename POLY-Q® 40-770, which is commercially available from Arch Chemicals, Inc., 501 Merritt 7, Norwalk, Connecticut 06851; 1,4-Butane diol sold under the tradename 1,4 BD, which is commercially available from BASF, 3000 Continental Drive - North, Mount Olive, New Jersey 07828 - 1234; an aliphatic diamine sold under the tradename CLEARLINK™ 1000(g), which is commercially available from Dorf Ketal Chemicals, India or UOP, 25 E. Algonquin Rd., Des Plaines, Illinois 60017; a diethyltoluene diamine sold under the tradename ETHACURE 100 LC, which is commercially available from Albemarle Corporation, 451 Florida Street, Baton Rouge, Louisiana 70801; unsaturated dimmers sold under the tradename FATTY ACIDS C-18, which is commercially available from Arizona Chemical, P. O. Box 550850, Jacksonville, Florida 32225.

Generally, it should be understood that any of the isocyanate reactive compounds discussed herein may be combined together to form the isocyanate reactive component as an admixture of the compounds and potentially other additives as discussed herein.

### Isocyanate Component

It is contemplated that most any isocyanate having two or more isocyanate groups in the molecule may be used as a polyisocyanate and may be incorporated into the isocyanate component used for forming the activatable material of the present invention. Both aliphatic or cycloaliphatic isocyanates, such as hexamethylene diisocyanate (HDI) or isophorone diisocyanate (IPDI) and/or aromatic isocyanates, such as toluene diisocyanate (TDI), diphenylmethane diisocyanate (MDI) or mixtures of diphenylmethane diisocyanate and polymethylenepolyphenylene polyisocyanates (crude MDI), mixture of TDI and MDI, combinations thereof or the like may be used. It is also possible to use isocyanates which were modified by the incorporation of urethane, uretdione, isocyanurate, allophanate, uretonimine and other groups, i.e. modified isocyanates.

When preparing polyurethanes according to the invention by the isocyanate addition reaction, the isocyanate-reactive component is allowed to react with an polyisocyanate. Suitable polyisocyanates are known in the art. Suitable polyisocyanates can be unmodified isocyanates, modified polyisocyanates, or isocyanate prepolymers. Suitable organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Examples of such isocyanates include those represented by the formula:

Q(NCO)ₙ

in which n is a number from 2 or fewer to about 5 or greater (typically 2 to 3) and Q is an aliphatic hydrocarbon group containing 2 or fewer to about 18 or greater (typically 6 to 10) carbon atoms, a cycloaliphatic hydrocarbon group containing 4 or fewer to about 15 or greater (typically 5 to 10) carbon atoms, aliphatic or araliphatic hydrocarbon group containing 8 or fewer to 15 or greater (typically 8 to 13) carbon atoms, or an aromatic hydrocarbon group containing 6 or fewer to about 15 or greater (typically 6 to 13) carbon atoms. Examples of suitable isocyanates include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3-and -1,4-diisocyanate, and mixtures of these isomers; 1-isocyanato-3,3,5-trimethyl-5-isocyanatomethyl-cyclohexane ("isophorone diisocyanate"); 2,4- and 2,6-hexahydrotoluene diisocyanate and mixtures of these isomers; dicyclohexylmethane-4,4'-diisocyanate ("hydrogenated MDI", or "HMDI"); 1,3- and 1,4-phenylene diisocyanate; 2,4- and 2,6-toluene diisocyanate and mixtures of these isomers ("TDI"); diphenylmethane-2,4'- and/or -4,4'-diisocyanate ("MDI"): naphthylene-1,5-diisocyanate; triphenyl-methane-4,4',4"-triisocyanate; polyphenyl-polymethylene-polyisocyanates of the type which may be obtained by condensing aniline with formaldehyde, followed by phosgenation ("crude MDI"); norbornane diisocyanates; m- and p-isocyanatophenyl sulfonylisocyanates; perchlorinated aryl polyisocyanates; modified polyisocyanates containing carbodiimide groups; modified polyisocyanates containing urethane groups; modified polyisocyanates containing allophanate groups; modified polyisocyanates containing isocyanurate groups; modified polyisocyanates containing urea groups; polyisocyanates containing biuret groups; polyisocyanates obtained by telomerization reactions; polyisocyanates containing ester groups; reaction products of the above-mentioned isocyanates with acetals; and polyisocyanates containing polymeric fatty acid groups. It is also possible to use the isocyanate-containing distillation residues accumulating in the production of isocyanates on a commercial scale, optionally in solution in one or more of the polyisocyanates mentioned above. It is also possible to use mixtures of the polyisocyanates described above.

Some particularly readily available polyisocyanates include, without limitation, 2,4- and 2,6-toluene diisocyanates and mixtures of these isomers ("TDI"); polyphenyl-polymethylene-polyisocyanates of the type obtained by condensing aniline with formaldehyde, followed by phosgenation ("crude MDI"); and polyisocyanates containing carbodiimide groups, urethane groups, allophanate groups, isocyanurate groups, urea groups, or biuret groups ("modified polyisocyanates").

It is, of course, also possible to use isocyanate prepolymers prepared by reaction of any of the above polyisocyanates with a sub-stoichiometric amount of an isocyanate-reactive compound.

Suitable crosslinking agents or chain extenders which may be included in the isocyanate-reactive component of the present invention typically have a molecular weight of less than 399, although higher weights are possible, and a functionality of from about 2 or less to about 6 or more (preferably 2 to 4). Chain extenders typically have a functionality of about 2 and crosslinkers typically have a functionality greater than 2, although not required. Such compounds typically contain hydroxyl groups, amino groups, thiol groups, or a combination thereof, and generally contain 2 or fewer to 8 or greater (preferably 2 to 4) isocyanate-reactive hydrogen atoms.

The chain extender and/or cross-linking agent is generally included in the isocyanate-reactive component in an amount of from about 1 to about 75% by weight, based on total weight of isocyanate-reactive component, typically, from about 10 to about 65% by weight, more typically from about 15 to about 55% by weight.

Exemplary hydroxyl-containing chain extenders and crosslinkers include glycols and polyols, such as 1,2-ethanediol, 1,2- and 1,3-propylene glycol, 1,4-and 2,3-butylene glycol, 1,6-hexanediol, 1,8-octanediol, neopentyl glycol, cyclohexane-dimethanol, 1-methyl-1,3-propanediol, 2-methyl-1,3-propanediol, glycerol, trimethylol-propane, 1,2,6-hexanetriol, pentaerythritol, 1,2,4-butanetriol, and trimethylolethane.

Suitable chain extenders also include hydroxyl-containing polyethers typically having a molecular weight of less than 399, but possibly a higher molecular weight. Suitable hydroxyl-containing polyethers can be prepared, for example, by the methods discussed above for the higher molecular weight hydroxy-containing polyethers except that only lower molecular weight polyethers are used. Glycerol which has been propoxylated and/or ethoxylated to produce a polyol having a molecular weight of less than 399 is an example. Particularly suitable polyethers include polyoxyalkylene polyether polyols, such as polyoxyethylene diol, polyoxypropylene diol, polyoxybutylene diol, and polytetramethylene diol having the requisite molecular weights.

Amine chain extenders preferably contain exclusively aromatically bound primary or secondary (preferably primary) amino groups and preferably also contain alkyl substituents. Examples of such aromatic diamines include 1,4-diaminobenzene, 2,4- and/or 2,6-diaminotoluene, meta-xylene diamine, 2,4'-and/or 4,4'-diamino-diphenylmethane, 3,3'-dimethyl-4,4'-diaminodiphenylmethane, 1-methyl-3,5-bis(methylthio)-2,4- and/or -2,6-diaminobenzene, 1,3,5-triethyl-2,4-diaminobenzene, 1,3,5-triisopropyl-2,4-diaminobenzene, 1-methyl-3,5-diethyl-2,4- and/or -2,6-diaminobenzene, 4,6-dimethyl-2-ethyl-1,3-diaminobenzene, 3,5,3',5'-tetraethyl-4,4-diaminodiphenylmethane, 3,5,3',5'-tetraisopropyl-4,4'-diaminodiphenylmethane, and 3,5-diethyl-3'.5'-diisopropyl-4,4'-diaminodiphenylmethane. Although generaiiy less preferred, certain (cyclo)aliphatic diamines are also suitable. A particularly suitable (cyclo)aliphatic diamine is 1,3-bis(aminomethyl)cyclohexane. Such diamines may, of course, also be used as mixtures.

Suitable tertiary amine or ammonium compounds useful in the isocyanate-reactive component of the present invention include isocyanate-reactive tertiary amine polyethers, fatty amido-amines, ammonium derivatives of fatty amido-amines and mixtures thereof.

Suitable catalysts or curing agents include tertiary amines and metal compounds known in the art. Suitable tertiary amine catalysts include triethylamine, tributylamine, N-methylmorpholine, N-ethylmorpholine, N,N,N',N'-tetramethylethylene diamine, pentamethyldiethylene triamine, and higher homologs, 1,4-diazabicyclo[2.2.2]octane, N-methyl-N'-(dimethylaminoethyl)piperazine, bis(dimethylaminoalkyl)piperazines, N,N-dimethylbenzylamine, N,N-dimethylcyclohexylamine, N,N-diethylbenzylamine, bis(N,N-diethylaminoethyl)adipate, N,N,N',N'-tetramethyl-1,3-butanediamine, N,N-dimethyl-.beta.-phenylethylamine, 1-methyl imidazole, 1,2-dimethylimidazole, 2-methylimidazole, monocyclic and bicyclic amidines, bis(dialkylamino)alkyl ethers (U.S. Pat. No. 3,330,782), and tertiary amines containing amide groups (preferably formamide groups). The catalysts used may also be the known Mannich bases of secondary amines (such as dimethylamine) and aldehydes (preferably formaldehyde) or ketones (such as acetone) and phenols.

Suitable catalysts also include certain tertiary amines containing isocyanate reactive hydrogen atoms. Examples of such catalysts include triethanolamine, triisopropanolamine, N-methyldiethanolamine, N-ethyldiethanolamine, N,N-dimethylethanolamine, their reaction products with alkylene oxides (such as propylene oxide and/or ethylene oxide) and secondary-tertiary amines.

Other suitable catalysts include organic metal compounds, especially organic tin, bismuth, and zinc compounds. Suitable organic tin compounds include those containing sulfur, such as dioctyl tin mercaptide and, preferably, tin(II) salts of carboxylic acids, such as tin(II) acetate, tin(II) octoate, tin(II) ethylhexoate, and tin(II) laurate, as well as tin(IV) compounds, such as dibutyltin dilaurate, dibutyltin dichloride, dibutyltin diacetate, dibutytin maleate, and dioctyltin diacetate. Suitable bismuth compounds include bismuth neodecanoate, bismuth versalate, and various bismuth carboxylates known in the art. Suitable zinc compounds include zinc neodecanoate and zinc versalate. Mixed metal salts containing more than one metal (such as carboxylic acid salts containing both zinc and bismuth) are also suitable catalysts.

Any of the above-mentioned catalysts may, of course, be used as mixtures.

The catalyst is generally included in the isocyanate-reactive component in an amount of from about 0.01 to about 7% by weight, based on total weight of isocyanate-reactive component, preferably from about 0.5 to about 6% by weight, most preferably from about 1 to about 5% by weight.

In one embodiment, one or more of the isocyanates of the activatable material are blocked. Preferably, although not required, the isocyanates are blocked such that the isocyanate component, the activatable material or both are substantially devoid of free unreacted (NCO) groups. For example, one of the above isocyanates can be reacted to form blocked isocyanates (e.g., inert adducts) such as urethanes, ureas, alophonate biuret etc., which, at elevated temperatures, can undergo trans-esterification reactions with the above isocyanate reactive compounds to form polyurethanes, which may be adhesives, foams, combinations thereof or the like. An example of one reaction between a blocked isocyanate and a polyol with the addition of heat is shown in reactive scheme I below:

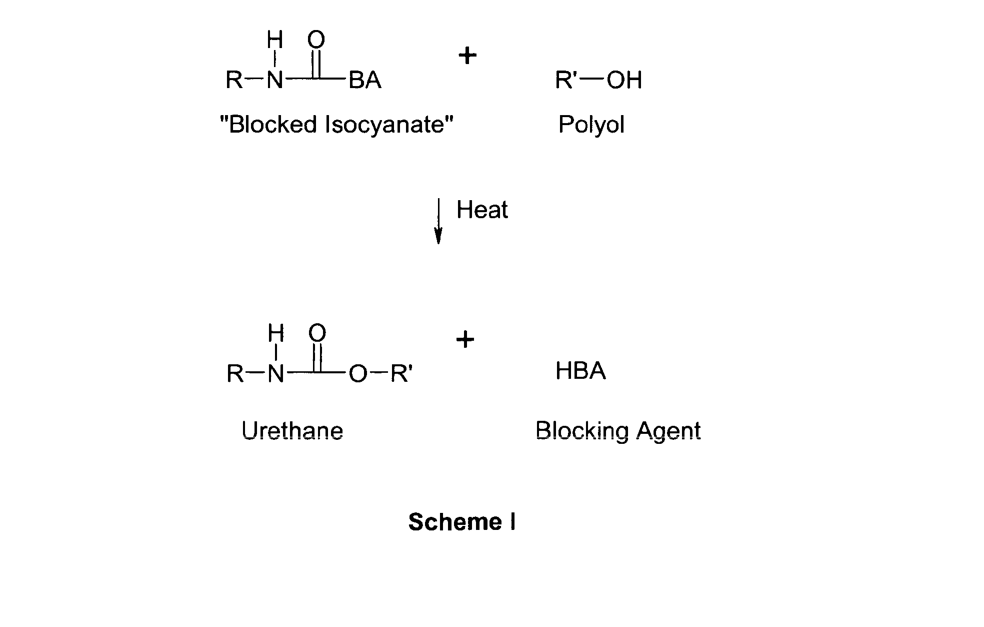

Typically, the isocyanates are blocked such that they do not react with isocyanate reactive compounds in the activatable material at relatively lower temperatures (e.g., temperatures below about 80 °C, more typically below about 60 °C and even more typically below about 40 °C). However, the blocked isocyanates typically become unblocked at relatively higher temperatures (e.g., temperatures above about 100 °C, more typically above about 120 °C and even more typically above about 160 °C). For unblocking the blocked isocyanates, the activatable material should typically be exposed to the elevated temperatures for at least about 10 minutes or less, more typically at least about 20 minutes (e.g., about 30 minutes) and even more typically at least about 45 minutes (e.g, about 60 minutes).

The isocyanates may be blocked using a variety of chemical compounds depending upon the desired temperature of unblocking. Pyrazoles such as 3,5 dimethyl pyrazole may be employed as the blocking agent when an unblocking temperature between about 100 °C and about 120 °C is desired. A ketoxime such as Methyl Ethyl Ketoxime may be employed as the blocking agent when an unblocking temperature between about 140 °C and about 200 °C is desired. An acid ester such as malonic acid ester may be employed as the blocking agent when an unblocking temperature between about 80 °C and about 100 °C is desired. In one preferred embodiment, a blocking agent such as caprolactam, alkylated phenol or both are employed to provide an unblocking temperature between about 150°C and about 170 °C. Isopropyl alcohol may also be employed as a blocking agent. Generally, it is contemplated that the activatable material of the present invention may include any of isocyanates discussed herein and the isocyanates may be blocked with any of the above blocking agents suitable for blocking the chosen isocyanate.

Exemplary blocked isocyanates include, without limitation, solventless TDI-prepolymers blocked with one or more alkylated phenols and optionally including a plasticizer. Examples of such isocyanates having unblocking temperatures greater than about 160 °C are sold under the tradenames TRIXENE BI 7772 or TRIXENE Bl 7779 and are commercially available from Baxended Chemicals Ltd., Accrington, Lancashire BB5, 2SL, England. Another exemplary blocked isocyanate is a solventless powder dimeric 2,4-Toluene Diisocyanate sold under the tradename DESMODUR TT 44 C, which is commercially available from Rhein Chemie Corporation. Yet another exemplary blocked isocyanate is a solventless 1,6-Hexamethylene Diisocyanate Dimer/Trimer sold under the tradename DESMODUR N-3400, which is commercially available form Bayer AG, 51368 Leverkusen, Germany.

Other exemplary blocked isocyanates include isonate based prepolymers blocked with an oxime (e.g., 2-butanone oxime). Such isocyanates are sold under the tradenames P-1 ISONATE 50 OP MDI/PPG 2000 or P-2 ISONATE 50 OP MDI/Tone 0240. Another exemplary blocked isocyanate is isophorone diisocyanate blocked with isopropyl alcohol (IPDI/IPA).

In one particular embodiment, it is contemplated that the activatable material may include a single compound that includes a blocked isocyanate and a isocyanate reactive compound. As an example, the activatable material may include or be substantially exclusively formed of a blocked isocyanate that may also be classified as a polyol. One example of such a blocked isocyanate is a hydroxyl functional uretdion, which preferably does not contain any free NCO groups. Reaction scheme II below illustrated one such isocyanate being turned into a polyurethane by exposure to elevated temperatures which are typically higher than 150 °C.

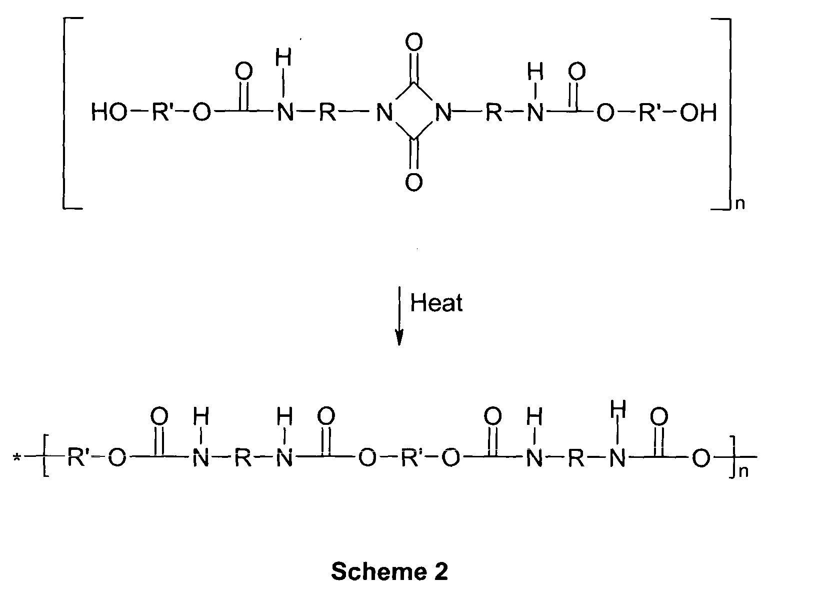

When the activatable material is heat-activated, the heat for activation may be supplied from a variety of sources such as microwave energy, ionizing radiation, an oven, a thermoelectric device, electrical energy, chemical reaction, combinations thereof or the like. In a preferred embodiment, the activatable material is processed along with an article of manufacture and the natural processing or assembly steps employed to create the article will provide the heat. For example, the activatable material may be applied to a structure of an automotive vehicle (e.g., according to techniques further described below) and may be activated by coating (e.g., e-coating) or painting operations such as e-coat oven bake, primer oven bake, paint oven bake, combinations thereof or the like. Exemplary temperatures encountered in an automobile assembly body shop oven, e-coat oven, paint oven or the like may be in the range of about 148.89 °C to about 204.44 °C (300 °F to 400 °F).

### Epoxy Resin

Generally it is contemplated that the activatable material may include an epoxy (e.g., an epoxy resin). It is also contemplated that the activatable material may be substantially or entirely free of any epoxy resin. Epoxy resin is used herein to mean any of the conventional dimeric, oligomeric or polymeric epoxy materials containing at least one epoxy functional group. The polymer-based materials may be epoxy containing materials having one or more oxirane rings polymerizable by a ring opening reaction.

The epoxy may be aliphatic, cycloaliphatic, aromatic or the like. The epoxy may be supplied as a solid (e.g., as pellets, chunks, pieces or the like) or a liquid (e.g., an epoxy resin). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules.

Preferably, an epoxy resin is added to the activatable to increase adhesion properties of the material. Additionally, the epoxy resin may strengthen cell structure when the activatable material is a foamable material. One exemplary epoxy resin may be a phenolic resin, which may be a novalac type or other type resin. Other preferred epoxy containing materials may include a bisphenol F epoxy resin, a bisphenol-A epichlorohydrin ether polymer, or a bisphenol-A epoxy resin, which may or may not be modified with butadiene or another polymeric additive. One exemplary preferred epoxy resin is a bisphenol-A epoxy resin sold under the tradename DER-332 and commercially available from Dow Chemicals, Midland, Michigan.

When used, one or more epoxy resins may make up about 0.1 % or less to about 80% or greater, more typically about 4% to about 35% and even more typically about 10% to about 20% of the activatable material. Additionally it should be noted that various catalysts, curing agent or curing agent accelerators such as imidazoles can assist in the polymerization, curing and/or cross-linking of the epoxy resins. It should be further be understood that the blowing agents and curing agents discussed herein for epoxy resins or polyurethanes may be heat activated at elevated temperatures such as temperatures often encountered in e-coat or paint ovens used for automotive vehicles.

### Other Additives or Fillers

The activatable material of the present invention can include a variety of different additives or fillers. Suitable additives, which may or may not be isocyanate reactive, can include foaming agents, processing aids, fillers, agents or performance modifiers, UV resistant agents, flame retardants, impact modifiers, heat stabilizers, colorants, lubricants, combinations thereof or the like.

Suitable blowing or foaming agents for use in the preparation of polyurethane foams include water and/or readily volatile organic substances. Organic blowing agents include acetone, ethyl acetate, methanol, ethanol, low-boiling hydrocarbons (such as butane, hexane, or heptane) or fluorocarbons, chlorofluorocarbons, hydrochlorofluorocarbons, or other halogen-substituted alkanes (such as methylene chloride, chloroform, ethylidene chloride, vinylidene chloride, monofluorotrichloro-methane, chlorodifluoromethane, and dichlorodifluoromethane), dimer acids, diethyl ether, or carboxylic acids (such as lactic acid, citric acid, and malonic acid), as well as carbon dioxide generated by the hydrolysis of isocyanate groups or reaction of isocyanate group with water.

A blowing effect may also be obtained by adding compounds which decompose at temperatures above room temperature and thereby give off gases such as nitrogen (for example, azo compounds such as azoisobutyronitrile or carbon dioxide (such as dimethyl dicarbonate). The blowing agent may include one or more nitrogen containing groups such as amides, amines and the like. Examples of suitable blowing agents include azodicarbonamide, dinitrosopentamethylenetetramine, azodicarbonamide, dinitrosopentamethylenetetramine, 4,4;-oxy-bis-(benzenesulphonylhydrazide), trihydrazinotriazine and N, Nᵢ-dimethyl-N,Nᵢ-dinitrosoterephthalamide. Additional blowing agents can include hydrates such as aluminum trihydrate and calcium sulfate hydrates, zeolites, molecular sieves or the like,

An accelerator for the blowing agents may also be provided in the activatable material. Various accelerators may be used to increase the rate at which the blowing agents form inert gasses. One preferred blowing agent accelerator is a metal salt, or is an oxide, e.g. a metal oxide, such as zinc oxide. Other preferred accelerators include modified and unmodified thiazoles or imidazoles.

The blowing agent, when included, is generally included in the isocyanate-reactive component in an amount of from about 0.05 to about 7% by weight, based on total weight of isocyanate-reactive component, preferably from about 0.1 to about 6% by weight, most preferably from about 0.5 to about 5% by weight.

Other additives which may optionally be included in the isocyanate-reactive component of the invention and include, for example, flame retardants, internal mold release agents, surfactants, acid scavengers, water scavengers, cell regulators, pigments, dyes, UV stabilizers, plasticizers, fungistatic or bacteriostatic substances, and fillers.

Suitable flame retardants (which, as the term is used herein, also include smoke suppressants and other known combustion modifiers), include phosphonates, phosphites, and phosphates (such as dimethyl methylphosphonate, ammonium polyphosphate, and various cyclic phosphate and phosphonate esters known in the art); halogen-containing compounds known in the art (such as brominated diphenyl ether and other brominated aromatic compounds); melamine; antimony oxides (such as antimony pentoxide and antimony trioxide); zinc compounds (such as various known zinc borates); aluminum compounds (such as alumina trihydrate); and magnesium compounds (such as magnesium hydroxide).

Internal mold release agents are compounds that are added to the reactive components of the isocyanate addition reaction, usually the isocyanate-reactive component, to assist in the removal of a polyurethane product from a mold. Suitable internal mold release agents for the present invention include those based at least in part on fatty acid esters (e.g., U.S. Pat. Nos. 3,726,952, 3,925,527, 4,058,492, 4,098,731, 4,201,847, 4,254,228, 4,868,224, and 4,954,537); metal and/or amine salts of carboxylic acids, amido carboxylic acids, phosphorus-containing acids, or boron-containing acids (e.g., U.S. Pat. Nos. 4,519,965, 4,581,386, 4,585,803, 4,876,019, and 4,895,879); polysiloxanes (e.g., U.S. Pat. No. 4,504,313); amidines (e.g., U.S. Pat. Nos. 4,764,540, 4,789,688, and 4,847,307); resins prepared by the reaction of isocyanate prepolymers and a polyamine-polyimine component (e.g., U.S. Pat. No. 5,198,508); and neutralized esters prepared from certain amine-started tetrahydroxy compounds described In U.S. Pat. No. 5,208,268.

Surfactants (or surface-active agents) include emulsifiers and foam stabilizers. Examples of suitable surfactants include any of several silicone surfactants known in the art (including, for example, those available commercially from Dow Corning Corporation, Union Carbide Chemical and Plastics Co., Inc., and Rhein Chemie Corporation), as well as various amine salts of fatty acids (such as diethyl-amine oleate or diethanolamine stearate) and sodium salts of ricinoleic acids.

Acid scavengers are compounds that control the acidity and water concentration of the compositions of the invention. Preferred acid scavengers include various orthoesters (such as trimethyl orthoformate), carbodiimides (such as 2,2',6,6'-tetraisopropyidiphenylcarbodiimide, available as STABOXAL I and STABOXAL P from Rhein Chemie Corp.), and epoxides (such as 3,4-epoxycyclohexylmethyl 3,4-epoxy-cyclohexylcarboxylate, available as ERL -4221 from Union Carbide).

Water scavengers (or moisture scavengers) are compounds that maintain a low water content in the compositions of the invention. Suitable water scavengers are described, for example, in U.S. Pat. Nos. 3,755,222 and 4,695,618. Examples of suitable water scavengers include alkali aluminosilicates (available as BAYLITH L, BAYLITH T, and BAYLITH W powders or pastes from Bayer AG, Germany) and chemically reacting water scavengers (such as ZOLDINE MS-Plus from Angus Chemical Company).

Fillers and/or reinforcing substances that are suitable for the activatable material include, without limitation, barium sulfate, calcium carbonate, calcium silicate, clays, kieselguhr, whiting, mica, and especially glass fibers, liquid crystal fibers, glass flakes, glass balls, microspheres, aramide fibers, aramid pulp, particulated materials (e.g., powder) and carbon fibers, combinations thereof or the like are also suitable for the activatable material. Typically, fillers and/or reinforcement materials, when used, include a relatively low-density material that is generally non-reactive with the other components present in the activatable material. While the fillers may generally be present within the activatable material to take up space at a relatively low weight, it is contemplated that the fillers, the reinforcement materials or both may impart properties such as strength and impact resistance to the activatable material.

Examples of additional fillers include silica, diatomaceous earth, glass, clay (e.g., including nanoclay), talc, pigments, colorants, glass beads or bubbles, glass, carbon or ceramic fibers, nylon or polyamide fibers (e.g., Kevlar), antioxidants, and the like. Such fillers, particularly clays, can assist the activatable material in leveling itself during flow of the material. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed.

In one preferred embodiment, one or more mineral or stone type fillers such as calcium carbonate, sodium carbonate or the like may be used as fillers. In another preferred embodiment, silicate minerals such as mica may be used as fillers.

When employed, the fillers in the activatable material can range from 10 % to 90 % by weight of the activatable material. According to some embodiments, the activatable material may include from about 0 % to about 3 % by weight, and more preferably slightly less that 1 % by weight clays or similar fillers. Powdered (e.g. about 0.01 to about 50, and more preferably about 1 to 25 micron mean particle diameter) mineral type filler can comprise between about 5 % and 70 % by weight, more preferably about 10 % to about 50% by weight.

### Formation and Application of the Activatable Material

Formation of the activatable material can be accomplished according to a variety of new or known techniques. Preferably, the activatable material is formed as a material of substantially homogeneous composition. However, it is contemplated that various combining techniques may be used to increase or decrease the concentration of certain components in certain locations of the activatable material.

Typically, the activatable material is formed by combining the isocyanate reactive component with the isocyanate component in a blocked condition and with any other additives. Alternatively, particularly where the isocyanate reactive component and the isocyanate component are formed of a single compound, any other desired or required additives are added to the compound. Of course, it is contemplated that additional blocked isocyanates and isocyanate reactive compounds can also be added to such a single compound. Generally, it is contemplated that the components may be supplied as liquids, solids, semi-solids, combinations thereof or the like. Typically, however, the activatable material, once formed, is solid or semi-solid (e.g., paste-like). Although it is contemplated that the activatable material may be activated upon combination of the component, it is preferred that the activatable material is formed as a solid, a liquid or a combination thereof and is activated to expand (e.g., foam), cure or both upon exposure to an ambient condition (e.g., heat). In one preferred embodiment, the activatable material is substantially non-tacky and/or substantially dry to the touch.

The components are typically combined in one or more containers such as large bins or other containers. Preferably, the containers can be used to intermix the components by rotating or otherwise moving the container or moving the components within the container. Thereafter, heat, pressure or a combination thereof may be applied to soften or liquidize the components such that the components can be intermixed by stirring or otherwise into a single homogenous composition.

According to another embodiment, the activatable material may be formed by heating one or more of the components that is generally easier to soften or liquidize such as the polymer based materials to induce those components into a mixable state. Thereafter, the remaining components may then be intermixed with the softened components.

As an example, it is contemplated that the components may be supplied to and mixed in an extruder (e.g., a twin-screw extruder, a co-kneader or the like)

Depending upon the components used, it may be important to assure that the temperature of the components remains below certain activation temperatures that might cause the activatable material to activate (e.g., form gasses, flow or otherwise activate), cure (e.g., harden, stiffen or otherwise change states) or both. Notably, when the activatable material contains a blowing agent or blocked isocyanate, it is typically desirable to maintain the temperature of the activatable material below a temperature that will activate or unblock the blowing agent or blocked isocyanate during formation of the activatable material or before the activatable material is applied to a surface. In situations where it is desirable to maintain the activatable material at lower temperatures it may be desirable to maintain the components in a semi-solid or viscoelastic state using pressure or a combination of pressure and heat to intermix the components of the activatable material. Various machines such as extruders have been designed to applying heat, pressure or both to materials.

In forming epoxy/polyurethane activatable materials, a blocked isocyanate (e.g., a relatively low equivalent weight blocked isocyanate) is admixed with one or more polyols and one or more epoxy resins. The polyols can include any of the polyols discussed herein and specifically typically include chain extender/crosslinkers. The epoxy resins may be any one or combination of the resins discussed herein and specifically typically include a di-epoxy monomer.

In one embodiment, during activation, polymerization or both of the epoxy/polyurethane activatable materials, it is believed that, without being held to any particular theory, the epoxy resin reacts in the presence of oxazolidone forming catalyst with isocyanate groups (e.g., from blocked isocyanate) at an activation temperature between about 300 °F and about 400 °F to form heat resistant oxazolidone linkages. Moreover the cellular structure of such activatable materials may be formed through a blowing reaction (CO₂ formation) of dimmer acid with blocked isocyanate.

### EXAMPLES

The following descriptions of the formation of an activatable material are intended to be examples and should not be used to limit the scope of the invention.

In one example, an activatable material can be formed and activated to form a relatively flexible polyurethane foam using the following protocol: TDI-based prepolymers blocked with alkylated phenol, containing a Plasticizers (Trixene B1 7779; Baxenden Chemicals Ltd.) are mixed at room temperature with castor based modified Polyol of functionality 4 (Caspol 5004; CasChem Inc. with previously premixed antioxidant Irganox 1010 (Ciba Specialty Chemicals Corp.) to form an initial mixture. Thereafter, a dimmer/trimmer of 1,6-hexametylene diisocyanate containing free NCO-groups (Desmodur N-3400; Bayer) and an aliphatic diamine chain extender (Clearink 1000; UOP or Dorf Ketal) are added to the initial mixture. After mixing for at least 10 minutes, the isocyanate from Desmodur N-3400 is substantially fully reacted with equimolar amount of Clearink and then a catalyst (e.g., a dibutyltin dilaurate such as Dabco T-12 (Air Products)) is added to the mixture. A dimmer acid (Fatty acids C-18; Arizona Chemical) is then added to the mixture and homogenized for about 10 minutes to form the activatable materials. Once formed, the activatable material can be activated by exposure to 180°C for a period of time such as 30 minutes. Flexible and resilient polyurethane foam with uniform cell structure is obtained. The foaming is achieved by in situ formed CO₂ as a product of NCO-groups liberated by dissociation of uretdion groups from Desmodur N-3400 with carboxylic from dimmer acid forming amide linkages.

In another example, an activatable material can be formed and activated to form a relatively flexible polyurethane foam using the following protocol: A dimmer/trimer of 1,6-hexamethylene diisocyanate containing free NCO-groups (Desmodur N-3400, Bayer) is mixed at room temperature with polyether polyol of low equivalent weight (Voranol 360 (Dow)). Thereafter, equimolar amount of secondary aliphatic diamine (Clearink 1000, UOP) is added to the mixture. After mixing for at least 10 minutes, the isocyanate from Desmodur N-3400 is substantially fully reacted with secondary amine groups from Clearink 1000 and then a surfactant (e.g., a silicone surfactant such as Dabco DC 193 from Air Products) and a catalyst (e.g., a dibutyltin dilaurate such as Dabco T-12 (Air Products)) are added to the mixture. A dimmer acid (e.g., Fatty acid C-18; Arizona Chemicals) is then added to the mixture and homogenized for about 10 minutes to form the activable materials. Once formed, the activable material can be activated by exposure to a temperature of about 180°C for a period of time such as 30 minutes. Rigid foam with uniform cell structure is obtained. The foaming is achieved by *in situ* formation of CO₂ as a product of NCO-groups liberated by dissociation of uretdion groups from Desmodur N-3400 with carboxylic groups from dimmer acid forming amide linkages.

In another example, an activatable material can be formed and activated to form a clear solid (non-cellular) elastomeric polyurethane using the following protocol: a TDI-based prepolymer blocked with alkylated phenol, solventless and free of plasticizer (Trixene Bl 7770; Baxender Chemicals Ltd.) is mixed at room temperature with diethyltoluene diamine (Ethacure 100LC; Albemarle Corporation) and then catalyst (e.g., a dibutyltin dilaurate such as Dabco T-12 (Air Products)) is added to the mixture. The mixture is homogenized for about 10 minutes to form activable materials. Once formed, the activable material can be activated by exposure to about 180°C for a period of time such as 30 minutes. Solid non-cellular clear elastomeric material is obtained.

Other exemplary compositions of activatable materials are shown below in table I below:

| **Designation** | **Components** | **PU** | **PU** | **PU/EPOXY** |
|---|---|---|---|---|
| Desmodur N-3400 | Blocked isocyanate | 33.5 | 19.8 | 19.8 |
| IPDI/IPA | Blocked isocyanate | - | - | 8.6 |
| DER-332(%) | Di-epoxy monomer | - | - | 17.5(22%) |
| Caspol 5004 | Crosslinker/polyol | 11.01 | 6.6 | - |
| Poly Q-40-800 | Crosslinker/polyol | 1.6 | 0.96 | - |
| Dimer acid | Blowing reactant | 24.5 | 14.7 | 14.7 |
| Clearlink 1000 | Chain extender | 28.8 | 16.9 | 17.0 |
| DC-193 | Surfactant | 0.2 | 0.6 | 0.6 |
| Dabco T-12 | Catalyst | 0.1 | 0.3 | 0.3 |
| Imicure®Ami-1 | Catalyst | - | - | 0.34 |

It should be understood that the amounts listed in tables I, II and III are meant to be exemplary and can vary by ±0.5 weight percentage points, ±2 weight percentage points, ±10 weight percentage points, ±20 weight percentage points or more. It should be further understood that the amounts listed in tables I, II and III are meant to be exemplary and can vary by ±0.5 %, ±2 %, ±10 %, ±20 % of their listed values or more.

### Application

After formation of the activatable material, the material is typically applied to a surface or substrate and activated. Activation of the material typically includes at least some degree of foaming or bubbling in situations where the activatable material, although not always required. Such foaming or bubbling can assist the activatable material in wetting a substrate and forming an intimate bond with the substrate. Alternatively, however, it shall be recognized that the activatable material may be activated to flow without foaming or bubbling and may still substantially wet the substrate to form an intimate bond. Formation of the intimate bond will typically but not necessarily occur upon curing of the activatable material.

It shall be understood that, depending upon its the intended application, the activatable material may be applied and activated in different ways and at different times. Thus, exemplary uses of the activatable material are discussed below to illustrate preferred methodologies of application and activation of the activatable material. In particular, the activatable material may used for, amongst others, reinforcement, sealing and adhering, acoustic baffling or the like.

### Reinforcement

The activatable material may be used to reinforce structural members of an article of manufacture. When used for reinforcement, the activatable material may be employed by itself, may be employed in conjunction with other materials (e.g., a backing), may be applied to a carrier member or the like.

According to one embodiment, the activatable material of the present invention is applied to a carrier member to form a reinforcement member and the reinforcement member is inserted within a cavity formed by a structural member of an automotive vehicle. The structural member of the automotive vehicle may be nearly any member of the vehicle including, but not limited to, frame members, body member, pillar structures, closure panels, roof assemblies, bumpers, combinations thereof or the like.

The carrier member may be selected from a variety of conventional and novel configurations. The activatable material of the present invention may thus be applied to a carrier member, such as a molded, extruded or stamped member (e.g., metal or plastic, foamed or unfoamed; exemplary materials of which include aluminum, magnesium, titanium, steel, molding compound (e.g., sheet or bulk molding compound), polyamide (e.g., nylon 6 or nylon 6,6), polysulfone, thermoplastic imide, polyether imide, polyether sulfone or mixtures thereof.

Examples of carrier members, structural reinforcement applications or the like, which may be employed in the present invention are disclosed in U.S. Patent Nos. 6,474,723; 6,467,834; 6,419,305; 6,358,584; 6,311,452; 6,296,298; 6,263,635, all of which are hereby incorporated by reference. Other examples are disclosed in U.S. Patent Application Serial Nos. 10/236,315; 10/098,952; 10/337,446; 09/939,152; 09/459,756; 60/409,625; 60/333,273; 60/317,201 all of which are also incorporated herein by reference for all purposes.

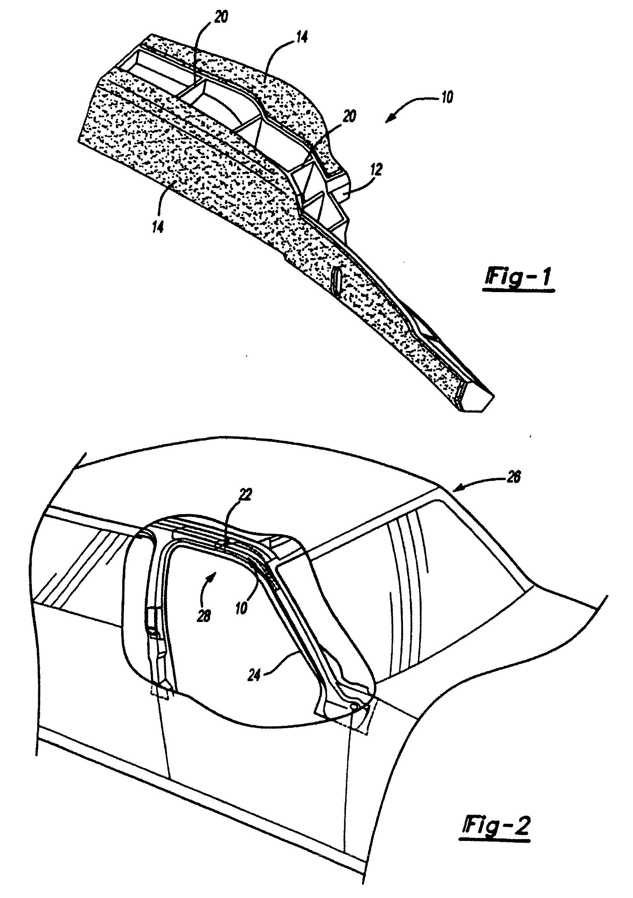

For purposes of illustration, Fig. 1 shows a reinforcement member 10 comprised of a carrier member 12 having masses 14 of activatable material disposed thereon. As shown the carrier member 12 is skeletal and includes a plurality of ribs 20. Moreover, the activatable material has been disposed upon the carrier member 12 in layers of substantially uniform thickness. It is contemplated however, that the carrier member 12 and the activatable material may be formed according to any suitable shape or configuration depending upon their intended application.

The exemplary reinforcement member 10, as shown in Fig. 2, has been inserted into a cavity 22 that is defined by a pillar structure 24 of an automotive vehicle 26. After insertion into the cavity 22, the masses 14 of activatable material are preferably activated to adhere to walls of the pillar structure 24 that define the cavity 22. For example, the masses 14 may be exposed to elevated temperature in an e-coat or painting operation thereby causing the masses 14 of activatable material to become flowable and expand to contact the walls of the pillar structure 24. At the same time or thereafter, the masses 14 may cure to adhere and bond to the walls of the pillar structure 24 thereby forming a reinforced structural system 28 for the vehicle 26.

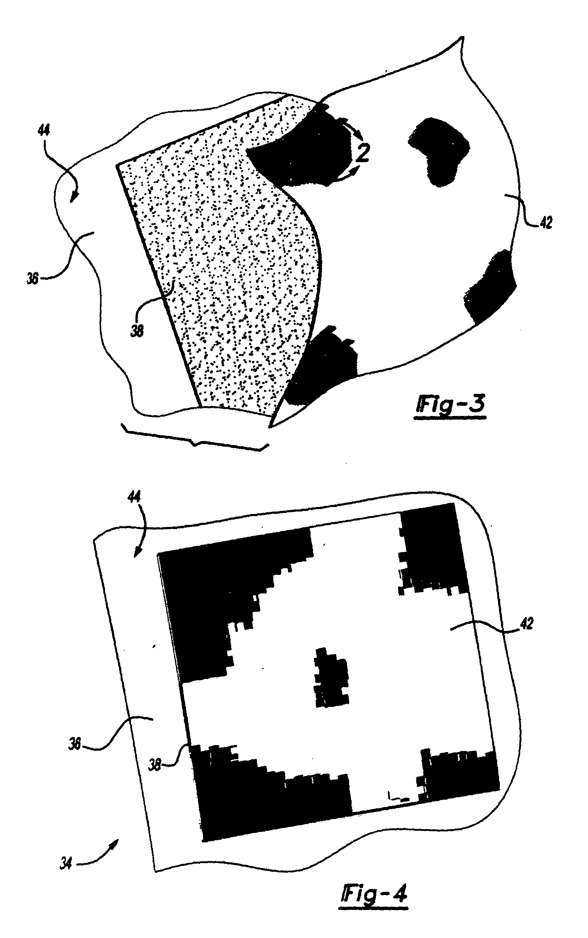

Also for purposes of illustration, Figs. 3 and 4 show the formation of a reinforced panel 34 comprised of a panel 36, a layer 38 of activatable material and a backing material 42. The panel 36 may be provided by any suitable component of the automotive vehicle. According preferred embodiment, the panel 36 is provided as an inner or outer body panel (e.g., a door panel, a roof panel, a side panel, a closure panel or the like) of the vehicle.

The backing material 42 may be chosen from a variety of materials. For example, and without limitation, the backing material may be formed of metal foils, metal sheets, metal screens or the like. As alternative examples, the backing material may be formed of polymeric (e.g., thermoplastic) films, sheets or mesh. In still other alternative embodiments, the backing material may be formed of cellulose fiber material such as impregnated or non-impregnated paper, wood or the like.

The reinforced panel 34 is formed by applying the layer 38 of activatable material to a surface 44 of the automotive vehicle panel 36 and applying the backing material 42 to the layer 38 of activatable material. It should be understood that the layer 38 of activatable material may be applied to the automotive vehicle panel 36 before, after or simultaneous with application of the backing material material 42 to the layer 38.

After application, the layer 38 of activatable material is preferably activated to adhere and bond to the panel 36 and the backing material 42. For example, the layer 42 may be exposed to elevated temperature in an e-coat or painting operation thereby causing the layer 42 of activatable material to become flowable and expand to contact and wet the panel 36 and the backing material 42. At the same time or thereafter, the layer 42 may cure to adhere to the panel 36 and the backing material 42 thereby forming the reinforced panel 34.

### Baffling

When employed for baffling, the activatable material may be used alone or may be disposed upon a carrier. Typically, the activatable material, the carrier or both are placed within a cavity of a structure of an article of manufacture and, upon activation, the activatable material, the carrier or both typically span a cross-section of the cavity for blocking passage of materials or sound through the cavity.

### Structural Adhesive

According to another embodiment, it is contemplated that an activatable material according to the present invention may be employed as a structural adhesive material. In such an embodiment, the material is typically activated and cured (e.g., at temperatures common to e-coat or automotive painting operatings) to adhere to a first member and a second member. Contact with attachment surface of the first member and the second member may occur prior to or during activation and curing of the material. Examples of structural adhesive applications are disclosed in U.S. Patent Application Serial Nos. 10/234,902; 10/386,287; 60/451,811, all of which are incorporated herein by reference for all purposes.

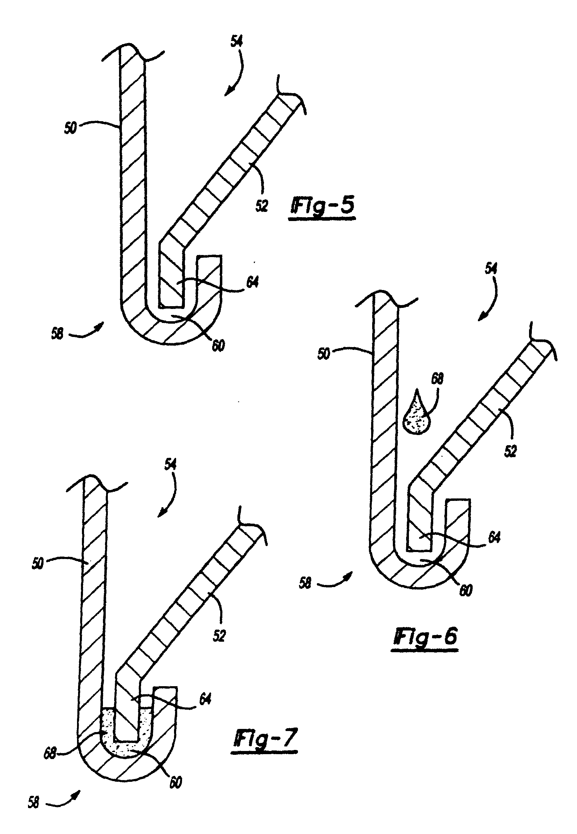

Referring to Fig. 5-7, there is illustrated a first member 50 and a second member 52 that come together to form a joint 54 (e.g. a hem flange joint) hem flange. As shown the first member 50 has an end portion 58 that forms a cavity 60 for receiving a free end 64 of the second member 52, which may be positioned as desired within the cavity 60. An activatable material 68 according to the present invention is also positioned within the cavity 60 such that upon activation and curing of the material 68, the first member 50 is adhered to the second member 52. Of course, it is contemplated that the activatable material of the present invention may be employed to structurally adhere any members together. Examples of suitable applications, which may benefit from the activatable material of the present invention are included in U.S. Patent No. 5,985,435, which is incorporated herein for all purposes.

### Non-Tacky Surface

In another embodiment of the present invention, an outer surface of the material of the present invention is treated for allowing it to be handled without undesirable material transfer or tackiness. Thus, it is possible that a synthetic material may be provided with a layer (from less than about 10 microns to about 2 cm (e.g., on the order of less than about 1 mm)) that is generally free of tack for facilitating handling. This layer may take the form of a plastic transfer film, a water based coating, a powder coating or otherwise. The present invention thus also contemplates a tacky structural adhesive material having a layer providing handling surface that is generally free of tack to the touch. It is also contemplated that the structural adhesive material, the layer or both may be formed of the activatable material of the present invention.

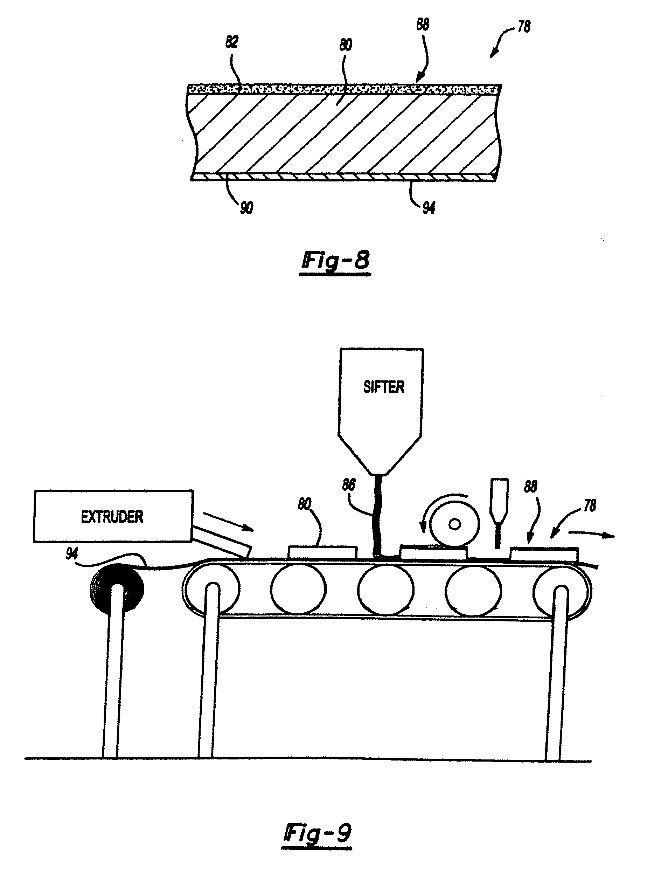

Referring to Fig. 8, there is illustrated a synthetic material 78 having a layer 80 of structural adhesive material having a layer 82 of substantially tack-free material (i.e., tack-free at room temperature of about 20°C) disposed thereon. As shown in Fig. 9, the layer 82 of substantially tack-free material is forced by applying a powder 86 or other particulated form that is pressed (e.g., rolled via a roller) into intimate contact with the layer 80 of adhesive material.

Applications which could benefit from the use of the activatable material of the present invention are disclosed in copending applications 10/217,991; 60/415,511, which are incorporated herein for all purposes. Moreover, it is contemplated that the layers of substantially tack-free material and the layers of structural adhesive material may include correspondence components as described in the aforementioned application.

Advantageously, the layer 82 of substantially tack-free material provides a substantially tack-free surface 88, which may be contacted by an individual, with a machine or otherwise such that a tacky surface 90 of the adhesive material may be contacted with a surface of a carrier member, a member of an article of manufacture (e.g., an automotive vehicle) or the like. As shown in Figs. 8 and 9, the tacky surface 90 may be temporarily covered with a protective layer 94 (e.g., release tape) until application of the material to a surface.

### Pre-formed Activatable Material

The activatable material of the present invention may be shaped or molded (e.g., injection molded) to form a member that is comprised substantially entirely of activatable material and is designed or configured to be inserted within a cavity of a structure of an automotive vehicle or other article of manufacture. As used herein, comprised substantially entirely of activatable material is intended to mean that the activatable material represents at least 70%, more typically at least 85% and even more typically at least 95% (e.g., 100%) of the volume of the member when the member is to be inserted into a cavity with any additional components such as fasteners, supports, combinations thereof or the like.

Preferably, such a member includes an outer surface that substantially conforms to the cavity into which the member is to be inserted. For example, if a structure has an internally cylindrical surface defining a cavity, the member will typically have an external cylindrical surface corresponding to such internal surface.

When the member is comprised substantially entirely of activatable material, the member is typically particularly suitable for used as a reinforcement or a baffle, but may serve other purposes as well. When used as a reinforcement, the member is typically elongated and will typically fill, upon expansion, a substantial portion of a length of a cavity. When used as a baffle, the member may be shorter, but it will typically, upon expansion, continuously span the cross-section of a cavity for inhibiting the passage of sound or other material therethrough. It is additionally contemplated that the member may serve as both reinforcement and a baffle.

### Extrusion

Regardless of the particular use, it has been found that activatable materials according to the present invention can be suitable for processing and/or application via extrusion. According to one preferred embodiment of the present invention, various components may be premixed into one, two or more pre-mixtures and introduced at one or various locations in a single or twin-screw extruder. Thereafter, the heat and pressure provided by the extruder mixes the activatable material into a single generally homogeneous composition, and preferably does so without activating the material. The material of the present invention may be applied, by extrusion, to any suitable surface of a carrier, a member of an article of manufacture (e.g., an automotive vehicle) or the like. In one embodiment, an automated or robotic extrusion applicator (e.g., a mini-applicator) is employed. Examples of these types of application and applicators are disclosed in U.S. Patent No. 5,358,397 and U.S. Patent Application Serial No. 10/342,025 both of which are hereby incorporated by reference for all purposes.

According to another preferred application, the activatable material of the present invention can be formed as masses (e.g., strands, strips or the like), which can be packaged together in contact with each other or separated (e.g., by release tape). According to such embodiment, the masses are preferably separable from each other without experiencing any substantially cohesive failure from bonding with adjacent masses. Thus, the masses may be peeled away from one another and applied to a substrate (e.g., a carrier, a member or otherwise) in manners described herein. Preferably such activatable material can be heated to expand and cure as described herein as well, although not necessarily required.

Advantageously, the activatable material of the present invention has shown valuable properties in its applications. In particular, it has been found that the addition of various amounts of thermoplastic polyethers as described herein can produce activatable materials that have relatively good adhesive properties upon curing. Moreover, activatable materials according to the present invention can exhibit relatively high strength moduli while also exhibiting relatively high strain to failure ratios.

As one example, the foamed activatable material can be configured to exhibit a tensile strength greater than about 3 Mpa or less, more typically greater than about 5 Mpa and even more typically greater than about 8 Mpa. As another example, the foamed activatable material can be configured to exhibit a tensile modulus greater than about 50 Mpa or less, more typically greater than about 150 Mpa and even more typically greater than about 300 Mpa. As another example, the foamed activatable material can be configured to exhibit a compressive strength greater than about 3 Mpa or less, more typically greater than about 6 Mpa and even more typically greater than about 10 Mpa. As another example, the foamed activatable material can be configured to exhibit a compressive modulus greater than about 30 Mpa or less, more typically greater than about 100 Mpa and even more typically greater than about 150 Mpa.

Activation of the activatable material can form a variety of different foams with a variety of different densities depending upon the desired use of the foam. As an example, the foam can have a density greater than about 0.05 g/cc or less, more typically greater than about 0.1 g/cc and even more typically greater than about 0.3 g/cc and also typically less than about 1.5 g/cc or greater, more typically less than about 1.0 g/cc and even more typically less than about 0.6 g/cc.

Generally, in certain embodiments, it may be desirable for the activatable material to exhibit adhesivity at temperatures greater than room temperature but less than activation temperature such that the activatable material can be adhered to substrates (e.g., carrier members, oily metal substrates or the like) prior to activation of the material.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. A method of sealing, baffling or reinforcing a portion of an article of manufacture, the method comprising:
providing an activatable material, the activatable material including:
i) an isocyanate reactive component; and
ii) a blocked isocyanate component; and
inserting the activatable material into a cavity that is at least partially defined by a structural member of the article of manufacture; and
activating the activatable material by unblocking the blocked isocyanate component to bond the activatable material to surfaces of the structural member.

2. A method as in claim 1 wherein the activatable material is substantially tack-free to the touch.

3. A method as in claim 1 or 2 wherein the activatable material, upon unblocking, forms a foam that exhibits a tensile strength greater than about 5 Mpa.

4. A method as in claim 1, 2 or 3 wherein the activatable material, upon unblocking, forms a foam that exhibits a compressive strength greater than about 6 Mpa.

5. A method as in any of claims 1-4 wherein the activatable material, upon unblocking, forms a foam that has a density greater than about 0.1 g/cc and less than about 1.0 g/cc.

6. A method as in any of claims 1-5 wherein the activatable material, upon unblocking, expands to a volume at least 50% greater than a volume of the activatable material in the unexpanded state.

7. A method as in any of claims 1-6 wherein the isocyanate component is blocked with a blocking agent selected from a pyrazole, a ketoxime, an acid ester, a caprolactam, an alkylated phenol or a combination thereof.

8. A method as in any of claims 1-7 wherein the activatable material includes an epoxy resin.

9. A method as in any of claims 1-8 further comprising:
applying the activatable material to a surface of a carrier member, wherein:
i) the article of manufacture is an automotive vehicle; and
ii) the step of inserting the activatable material into the cavity includes inserting the carrier member with the activatable material disposed thereon into the cavity; and
iii) the step of activating the activatable material includes exposing the activatable material to a temperature greater than 100 °C causing the activatable material to foam and bond to surfaces of the structural member.

10. A method as in claim 9 wherein the carrier is formed of a polyamide.

11. A method as in claim 9 or 10 wherein:
i) the carrier member including a plurality of ribs;
ii) the foam exhibit a tensile strength greater than about 8 Mpa; and
iii) the foam has a density greater than about 0.3 g/cc.

12. A method as in claim 9, 10 or 11 wherein:
i) the foam that exhibits a compressive strength greater than about 10 Mpa;
ii) the foam has a density less than about 0.6 g/cc.
